# EUROPEAN PATENT APPLICATION

(11) **EP 4 509 800 A1**
(43) Date of publication of application: **19.02.2025**
(21) Application number: 24801070.4
(22) Date of filing: 07.05.2024
(51) Int. Cl.: G01D 21/02, H01M 10/04

(54) **ABNORMALITY DETECTION METHOD AND APPARATUS FOR BATTERY CELL ENCASING, AND ELECTRONIC DEVICE AND STORAGE MEDIUM**

(30) Priority: 16.05.2023 CN 202310556999
(71) Applicant: Wuxi Lead Intelligent Equipment Co., Ltd., Wuxi, Jiangsu 214028 (CN)
(72) Inventor: CAO, XinYu, Wuxi, Jiangsu 214028 (CN); LIU, BaoLe, Wuxi, Jiangsu 214028 (CN)
(74) Representative: Rau, Schneck & Hübner Patentanwälte Rechtsanwälte PartGmbB
(86) International application number: PCT/CN2024/091511
(87) International publication number: WO 2024/235060

(57) **Abstract**

Embodiments of the present disclosure provides an abnormity detection method and device for cell entering into battery housing, and an electronic device and a storage medium, the method comprising: acquiring detection data from a process of a cell being pushed into a battery housing; generating one or more to-be-detected curves based on the detection data; detecting the one or more to-be-detected curves based on historical detection data to obtain detection results corresponding to each of the to-be-detected curves; and determining an abnormal result of the cell entering into battery housing based on the detection results corresponding to each of the to-be-detected curves. (Fig. 2)

## Description

### CROSS-REFERENCE TO RELATED APPLICATIONS

The present disclosure claims priority to Chinese Patent Application No. 202310556999.7 entitled "Abnormity detection method and device for cell entering into battery housing, and electronic device and storage medium", filed with the CNIPA on May 16, 2023, which is hereby incorporated by reference in its entirety.

### TECHNICAL FIELD

This disclosure relates to the technical field of industrial detection, specifically to an abnormity detection method and device for cell entering into battery housing, and electronic device and storage medium.

### BACKGROUND

With the continuous development of industrial products, requirements on quality detection for industrial products are becoming more and more demanding. In the related battery assembly technologies, it is necessary to install a battery cell into the battery housing via a housing entry machine. During a process of a cell entering into a battery housing, abnormities such as jamming or burrs may occur, which may lead to a reduction in the quality of the cell and has adverse influence on the performance and safety of the finished batteries. In the actual production process, it is usually done by monitoring the thrust value during a process of cell entering into battery housing, and by manually inspecting the cells with abnormal thrust values, to determine whether there is any abnormity. This method of abnormity detection is inaccurate and has a low level of intellectualization.

### SUMMARY

Embodiments of the present disclosure provide an abnormity detection method and device for cell entering into battery housing, and an electronic device and a storage medium, which can improve the level of intellectualization and accuracy of abnormity detection during the process of cell entering into battery housing.

According to a first aspect of embodiments of the present disclosure, provided is an abnormity detection method for cell entering into battery housing, the method includes:
acquiring detection data from a process of a cell being pushed into a battery housing;
generating one or more to-be-detected curves based on the detection data;
detecting the one or more to-be-detected curves respectively based on historical detection data to obtain detection results corresponding to each of the to-be-detected curves, the historical detection data being detection data from a historical process of the cell being pushed into the battery housing without occurrence of any abnormity; and
determining an abnormal result of the cell entering into battery housing based on the detection results corresponding to each of the to-be-detected curves.

Optionally, the detection data includes a displacement value and/or a thrust value of the cell being pushed into the battery housing;
the generating one or more to-be-detected curves based on the detection data includes:
generating a to-be-detected curve corresponding to a thrust value based on the same, and/or, generating a to-be-detected curve corresponding to a displacement value based on the same.

Optionally, the detecting the one or more to-be-detected curves respectively based on the historical detection data to obtain the detection results corresponding to each of the to-be-detected curves includes:
generating standard curves corresponding to each of the to-be-detected curves based on the historical detection data, and determining slope thresholds corresponding to each of the standard curves based on the same;
determining slopes of each of the to-be-detected curves and comparing the slopes of each of the to-be-detected curves with a slope threshold corresponding thereto to obtain a slope comparison result for each of the to-be-detected curves;
determining similarities between each of the to-be-detected curves and a standard curve corresponding thereto, and comparing each similarity with a similarity threshold to obtain a similarity comparison result for each of the to-be-detected curves; and
obtaining detection results corresponding to each of the to-be-detected curves based on the slope comparison result and the similarity comparison result for each of the to-be-detected curves.

Optionally, the method further includes:
determining abnormal data corresponding to each of the to-be-detected curves based on the detection data;
the detecting the one or more to-be-detected curves based on the historical detection data to obtain the detection results corresponding to each of the to-be-detected curves includes:
   determining an abnormal data threshold based on the historical detection data;
   comparing the abnormal data corresponding to each of the to-be-detected curves with the abnormal data threshold to obtain the detection results corresponding to each of the to-be-detected curves.

Optionally, the abnormal data includes jam values and burr values, and the abnormal data threshold includes a jam threshold and a burr threshold;
the comparing the abnormal data corresponding to each of the to-be-detected curves with the abnormal data threshold to obtain the detection results corresponding to each of the to-be-detected curves includes:
comparing jam values corresponding to each of the to-be-detected curves with the jam threshold to obtain a jam comparison result corresponding to each of the to-be-detected curves;
comparing burr values corresponding to each of the to-be-detected curves with the burr threshold to obtain a burr comparison result corresponding to each of the to-be-detected curves; and
obtaining detection results corresponding to each of the to-be-detected curves based on the jam comparison result and the burr comparison result corresponding to each of the to-be-detected curves.

Optionally, the method further includes:
determining a first quantity of jam values greater than the jam threshold in a target to-be-detected curve based on the jam comparison result corresponding to the target to-be-detected curve, the target to-be-detected curve being any of the to-be-detected curves;
determining a second quantity of burr values greater than the burr threshold in the target to-be-detected curve based on the burr comparison result corresponding to the target to-be-detected curve;
determining an abnormity score corresponding to the target to-be-detected curve based on the first quantity, a weight of the jam comparison result, the second quantity, and a weight of the burr comparison result, wherein the weight of the jam comparison result is greater than the weight of the burr comparison result; and
determining an abnormity grade of the cell entering into battery housing based on the abnormity score corresponding to each of the to-be-detected curves.

Optionally, after the generating one or more to-be-detected curves based on the detection data, the method further includes:
dividing each of the to-be-detected curves into a plurality of sub-curves according to the process of cell entering into battery housing, the plurality of sub-curves being in one-to-one correspondence to a plurality of sub-processes of the process of the cell entering into battery housing; and
the detecting the one or more to-be-detected curves respectively based on the historical detection data to obtain the detection results corresponding to each of the to-be-detected curves includes:
   detecting each sub-curve of each of the to-be-detected curves based on the historical detection data to obtain detection results corresponding to each sub-curve of each of the to-be-detected curves, and determining detection results corresponding to each of the to-be-detected curves based on the detection results corresponding to each of the sub-curves.

According to a second aspect of embodiments of the present disclosure, provided is an abnormity detection device for cell entering into battery housing, the device includes:
a data acquisition module for acquiring detection data from a process of a cell being pushed into a battery housing;
a curve construction module for generating one or more to-be-detected curves based on the detection data;
a curve detection module for detecting the one or more to-be-detected curves based on historical detection data to obtain detection results corresponding to each of the to-be-detected curves, the historical detection data being detection data from a historical process of the cell being pushed into the battery housing without occurrence of any abnormity; and
an abnormity detection module for determining an abnormal result of the cell entering into battery housing based on the detection results corresponding to each of the to-be-detected curves.

According to a third aspect of embodiments of the present disclosure, provided is an electronic device, which includes a memory and a processor, the memory having a computer program stored therein, wherein the computer program, when executed by the processor, enables the processor to implement the method of the first aspect of embodiments of the present disclosure.

According to a fourth aspect of embodiments of the present disclosure, provided is a computer-readable storage medium having a computer program stored thereon, wherein the computer program, when executed by a processor, implements the method of the first aspect of embodiments of the present disclosure.

Compared to the related technologies, embodiments of the disclosure has the following advantages:

Acquiring detection data from a process of a cell being pushed into a battery housing, generating one or more to-be-detected curves based on the detection data, and detecting these generated to-be-detected curves respectively based on historical detection data, which is the detection data from a historical process of the cell being pushed into the battery housing without occurrence of any abnormity, to obtain the detection results corresponding to each of the to-be-detected curves, and finally determining an abnormal result of the cell entering into battery housing based on the detection results corresponding to each of the to-be-detected curves. With this embodiment of the disclosure adopted, by generating to-be-detected curves, it is possible to intuitively reflect the specific situation of the battery cell being pushed into the battery housing, and by comparing and analyzing the to-be-detected curves with historical detection data, as well as synthesizing the detection results of each to-be-detected curve, the accuracy of cell abnormity judgment can be improved. The aforementioned judgment process does not require manual inspection, improving the level of intellectualization in the cell detection process. Moreover, analyzing the to-be-detected curves with historical detection data can effectively identify major abnormity issues in the production process for targeted solution, thereby improving the accuracy and efficiency of abnormity detection during the process of cell entering into battery housing.

### BRIEF DESCRIPTION OF THE DRAWINGS

To more clearly illustrate the technical solutions in embodiments of the disclosure, a brief introduction to the drawings required in the embodiment will be provided below. It is evident that the drawings described below are merely some of the embodiments of the present disclosure, and for ordinary technicians in this field, it is possible to obtain other drawings based on these without the need for creative effort.
FIG. 1 is a schematic diagram of an application scenario of an abnormity detection method for cell entering into battery housing provided in an embodiment of the disclosure;
FIG. 2 is a flowchart of an abnormity detection method for cell entering into battery housing provided in an embodiment of the disclosure;
FIG. 3 is a flowchart of another abnormity detection method for cell entering into battery housing provided in an embodiment of the disclosure;
FIG. 4 is a flowchart of yet another abnormity detection method for cell entering into battery housing provided in an embodiment of the disclosure;
FIG. 5 is a flowchart of still another abnormity detection method for cell entering into battery housing provided in an embodiment of the disclosure;
FIG. 6 is a schematic diagram of a curve abnormity detection process provided in an embodiment of the disclosure;
FIG. 7 is a schematic diagram of a detection process for jamming and burrs provided in an embodiment of the disclosure;
FIG. 8 is a structural schematic diagram of an abnormity detection device for cell entering into battery housing provided in an embodiment of the disclosure;
FIG. 9 is an architectural diagram of an abnormity detection system for cell entering into battery housing provided in an embodiment of the disclosure;
FIG. 10 is a structural schematic diagram of an electronic device provided in an embodiment of the disclosure.

### DETAILED DESCRIPTION

In conjunction with the drawings of this embodiment of the disclosure, a clear and complete description of the technical solutions in this embodiment will be provided. Obviously, the described embodiments are only part of the embodiments of the present disclosure, not all of them. All other embodiments obtained by those of ordinary skills in the art without creative effort based on the embodiments in this disclosure shall fall within the scope of protection of the present disclosure.

It should be noted that the terms "include" and "have" and any of their variations in this embodiment and the drawings are intended to cover non-exclusive inclusion. For example, a process, method, system, product, or device that includes a series of steps or units is not limited to the listed steps or units, but may optionally include unlisted steps or units, or may optionally include other inherent steps or units for these processes, methods, products, or devices.

In the related battery assembly technologies, it is necessary to install the battery cell into the battery casing through a housing entry machine. The abnormity detection method for the cell is to monitor the thrust value during the cell entering process and manually inspect the cells with abnormal thrust values to determine whether there is any abnormity. This method of abnormity detection is inaccurate and has a low level of intellectualization. This embodiment of the disclosure provides an abnormity detection method, device, electronic device, and storage medium for cell entering into battery housing, which can improve the accuracy of product abnormity detection. These will be respectively described in detail in the following.

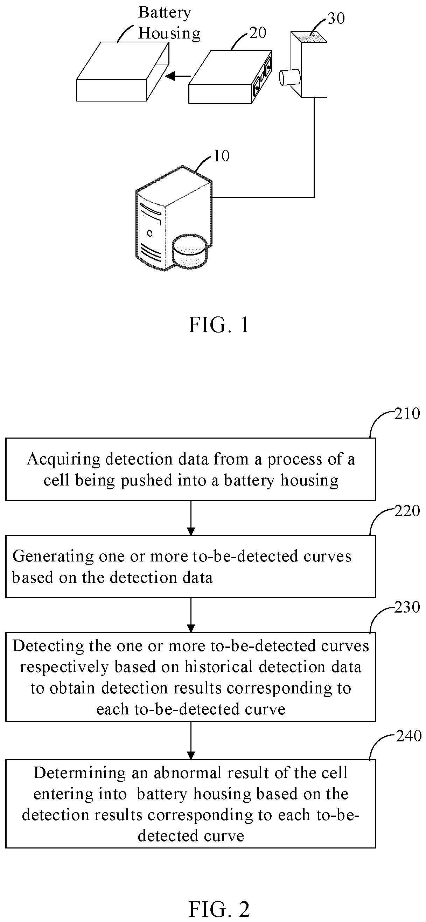

Referring to FIG. 1, which is a schematic diagram of the application scenario of an abnormity detection method for cell entering into battery housing provided in this embodiment of the disclosure. As shown in Figure 1, it may include an electronic device 10, a battery cell 20, and a pushing device 30. The electronic device 10 may be equipped with a processor, but not limited to this. The pushing device 30 may be equipped with sensing devices such as encoders and pressure sensors to collect detection data during the process of the pushing device 30 pushing the battery cell 20 into the battery casing. The electronic device 10 can be communicatively connected to the pushing device 30. Alternatively, the electronic device 10 can be communicatively connected to an external detection device, which is used to collect detection data during the process of the pushing device 30 pushing the battery cell 20 into the battery housing.

Electronic device 10 may obtain detection data from the process of battery cell 20 being pushed into the battery housing by the pushing device 30 or an external detection device, and generate one or more to-be-detected curves based on the detection data. Subsequently, electronic device 10 detects the generated one or more to-be-detected curves respectively based on historical detection data, obtaining the detection results corresponding to each to-be-detected curve; wherein, the historical detection data is detection data from a historical process of the cell being pushed into the battery housing by the pushing device 30 without occurrence of any abnormity. Finally, electronic device 10 determines the abnormal results of the cell entering into the housing for battery cell 20 based on the detection results corresponding to each to-be-detected curve.

Referring to FIG. 2, FIG. 2 is a flowchart of an abnormity detection method for cell entering into battery housing provided in an embodiment of the disclosure, which may be applied to the aforementioned electronic device 10. As shown in FIG. 2, the method may include the following steps:

210, acquiring detection data from a process of a cell being pushed into the battery housing.

In an embodiment of the disclosure, the battery cell may be pushed into the battery housing by the pushing device within the housing entry machine. The pushing device may have built-in sensing devices, which may include encoders and pressure sensors, etc. The pushing device collects detection data through its built-in sensing devices regarding its own process of pushing the battery cell into the battery housing and sends the collected detection data to the electronic device, enabling the electronic device to obtain the detection data from the process of the battery cell being pushed into the battery housing by the pushing device. Alternatively, there may be provided sensing devices external to the pushing device, which collect detection data during the process of the battery cell being pushed into the battery housing by the pushing device and send the collected detection data to the electronic device, enabling the electronic device to obtain the detection data from the process of the battery cell being pushed into the battery housing by the pushing device. The detection data may be data reflecting the process of the pushing device pushing the battery cell into the battery housing, such as the displacement data of the cell, velocity data of the cell, thrust data of the pushing device pushing the battery cell, and angular data of the pushing device pushing the battery cell, etc.

In this embodiment of the disclosure, the sensing devices may collect and send the detection data according to preset collection rules. For example, the sensing devices may continuously collect the detection data, or the sensing devices may collect the detection data at certain time intervals; the sensing devices may send the collected detection data to the electronic device in real time, or the sensing devices may send the collected detection data to the electronic device at certain time intervals.

220, generating one or more to-be-detected curves based on the detection data.

In an embodiment of the disclosure, the electronic device generates one or more to-be-detected curves based on the obtained detection data. If the detection data includes only one type of data, then the electronic device may generate a single to-be-detected curve, or it may generate multiple to-be-detected curves according to a certain collection time length; if the detection data includes more than one type of data, then the electronic device may generate multiple to-be-detected curves based on the number of data categories. The data categories may be data representing different contents, such as displacement data, thrust data, velocity data, and angular data, etc. The to-be-detected curves may be a curve obtained by segment fitting based on the collected detection data. The to-be-detected curves are curves that reflect variations in the detection data.

230, detecting the one or more to-be-detected curves respectively based on historical detection data, to obtain detection results corresponding to each of the to-be-detected curves, the historical detection data being detection data from a historical process of the cell being pushed into the battery housing without occurrence of any abnormity.

In an embodiment of the disclosure, after the electronic device determines that no abnormity has occurred during the process of the cell being pushed into the battery housing by the pushing device, the detection data from the process of the pushing device pushing the cell into the battery housing is stored in a database as historical detection data. The database may be internal or external to the electronic device.

The electronic device detects one or more to-be-detected curves generated based on the detection data, according to the stored historical detection data, to obtain the detection results corresponding to each curve. Specifically, the electronic device may plot a standard curve based on the historical detection data and compare this standard curve with each to-be-detected curve to obtain the corresponding detection results. For example, if a to-be-detected curve significantly differs from the standard curve, it is considered to have an abnormal detection result corresponding to itself. The electronic device may also compare the historical detection data with each peak (or the highest peak), and/or each trough (or the lowest trough), and/or the number of peaks/troughs in each to-be-detected curve to obtain the corresponding detection results. For instance, if the highest peak of a to-be-detected curve exceeds the historical detection data, it is considered to have an abnormal detection result corresponding to itself. The standard curve reflects variations in the historical detection data.

240, determining an abnormal result of the cell entering into the battery housing based on the detection results corresponding to each of the to-be-detected curves.

In an embodiment of the disclosure, the electronic device may determine the abnormal results of cell entering into the housing based on the detection results corresponding to each to-be-detected curve. Specifically, provided that only one to-be-detected curve is generated: if the detection result corresponding to this to-be-detected curve is abnormal, it is determined that the cell entering process is abnormal; alternatively, if the detection result corresponding to this to-be-detected curve is normal, it is determined that the process of cell entering into battery housing is normal. If more than one to-be-detected curve is generated, the electronic device may determine that the process of cell entering into battery housing is abnormal as soon as the detection result corresponding to any to-be-detected curve is abnormal; alternatively, the electronic device may determine that the process of cell entering into battery housing is abnormal only when the detection results corresponding to all to-be-detected curves are abnormal; alternatively, the electronic device may determine that the process of cell entering into battery housing is abnormal only when the detection results corresponding to more than a certain number of to-be-detected curves are abnormal.

With the above embodiment employed, by generating to-be-detected curves, it is possible to intuitively reflect the specific situation of the cell being pushed into the battery housing, and by comparing and analyzing the to-be-detected curves with historical detection data, as well as synthesizing the detection results of each to-be-detected curve, the accuracy of abnormal cell judgment can be improved. The aforementioned judgment process does not require manual inspection, improving the level of intellectualization in the cell detection process. In addition, analyzing the to-be-detected curves with historical detection data can effectively identify major abnormity issues in the production process for targeted solution, thereby improving the accuracy and efficiency of abnormity detection during the process of cell entering into battery housing.

In some embodiments, the electronic device, when executing the process of detecting one or more to-be-detected curves respectively based on historical detection data to obtain the detection results corresponding to each of the to-be-detected curves, may include the following steps:
generating standard curves corresponding to each of the to-be-detected curves based on the historical detection data, and determining slope thresholds corresponding to each of the standard curves based on the same;
determining slopes of each of the to-be-detected curves and comparing the slopes of each of the to-be-detected curves with a slope threshold corresponding thereto to obtain a slope comparison result for each of the to-be-detected curves;
determining similarities between each of the to-be-detected curves and a standard curve corresponding thereto, and comparing each similarity with a similarity threshold to obtain a similarity comparison result for each of the to-be-detected curves; and
obtaining detection results corresponding to each of the to-be-detected curves based on the slope comparison result and the similarity comparison result for each of the to-be-detected curves.

In this embodiment of the disclosure, the electronic device may generate one or more standard curves based on the historical detection data, with the standard curves corresponding one-to-one with the to-be-detected curves. For example, if the electronic device has generated three to-be-detected curves based on detection data of three data types, then the electronic device may generate three standard curves based on the historical detection data corresponding to the respective data types. The electronic device then determines the slope threshold for each standard curve. In specific implementations, for each standard curve, the electronic device may generate multiple (such as 500) baseline curves based on several historical detection data, calculate the slope of each baseline curve and sort them from smallest to largest or from largest to smallest, select the 50% of baseline curves with slope values distributed in the middle, calculate the average of these baseline curves as the slope threshold for the standard curve, and fit the standard curve using numerical methods. Here, the baseline curves are curves generated based on any historical detection data of the cell.

The electronic device determines the slopes of each of the to-be-detected curves and compares the slopes of each of the to-be-detected curves with a slope threshold of a standard curve corresponding thereto to obtain a slope comparison result for each to-be-detected curve. Specifically, for a to-be-detected curve, if the slope of the to-be-detected curve is smaller than the slope threshold of the corresponding standard curve, it is determined that the slope comparison result for the to-be-detected curve is abnormal; alternatively, if the slope of the to-be-detected curve is greater than the slope threshold of the corresponding standard curve, it is determined that the slope comparison result for the to-be-detected curve is abnormal; this is not specifically limited here.

The electronic device may determine the similarity between each to-be-detected curve and its corresponding standard curve, and compare each similarity with the similarity threshold to obtain the similarity comparison result for each to-be-detected curve. Specifically, the similarity threshold is an empirical value, and the electronic device may determine the similarity between each to-be-detected curve and its corresponding standard curve based on methods such as point-based methods, shape-based methods, or segment-based methods, and compare each similarity with a similarity threshold or the corresponding similarity threshold to obtain the similarity comparison result for each to-be-detected curve. For a to-be-detected curve, if the similarity thereof is smaller than the corresponding similarity threshold, it is determined that the similarity comparison result for the to-be-detected curve is abnormal.

By using the above method, the electronic device may obtain the slope comparison result and the similarity comparison result for each to-be-detected curve, and determine the detection result corresponding to each to-be-detected curve based on both the slope comparison result and the similarity comparison result. Specifically, for a to-be-detected curve, if the slope comparison result or the similarity comparison result is abnormal, it is determined that the detection result corresponding to the to-be-detected curve is abnormal; alternatively, it is determined that the detection result corresponding to the to-be-detected curve is abnormal only when both the slope comparison result and the similarity comparison result are abnormal.

Using the above embodiment, by constructing standard curves and comparing the slope and overall similarity between the to-be-detected curves and the corresponding standard curves, the accuracy of the analysis of the to-be-detected curves can be further improved, and the to-be-detected curves can be analyzed and detected more efficiently, improving the efficiency of the entire abnormity detection process.

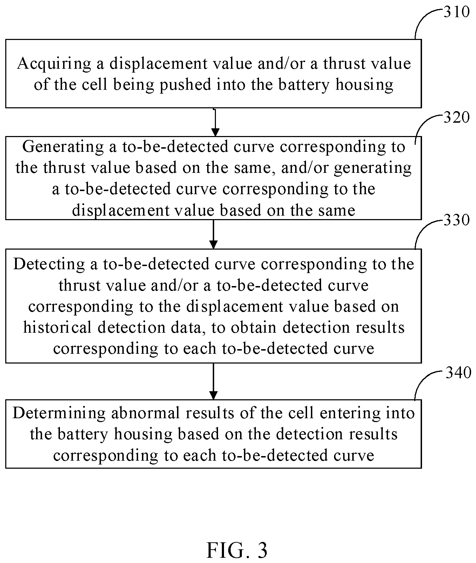

In one embodiment, referring to FIG. 3, FIG. 3 is a flowchart of another abnormity detection method for cell entering into battery housing provided in this embodiment of the disclosure, which can be applied to the aforementioned electronic device 10. As shown in FIG. 3, the method may include the following steps:

310, acquiring a displacement value and/or a thrust value of the cell being pushed into the battery housing.

In this embodiment of the disclosure, the electronic device may obtain the displacement value of the battery cell being pushed into the battery housing by the pushing device through sensing devices such as encoders, and obtain the thrust value of the pushing device pushing the battery cell into the battery housing through sensing devices such as pressure sensors. The electronic device may acquire the thrust value and displacement value according to preset collection rules. Like the aforementioned detection data collection process, the collection rules will not be elaborated here.

320, generating a to-be-detected curve corresponding to the thrust value based on the same, and/or generating a to-be-detected curve corresponding to the displacement value based on the same.

In this embodiment of the disclosure, the electronic device may generate a to-be-detected curve corresponding to the thrust value based on the same, and generate a to-be-detected curve corresponding to the displacement value based on the same. Specifically, when the electronic device collects a thrust value or a displacement value, it should generate a to-be-detected curve corresponding to the thrust value or generate a to-be-detected curve corresponding to the displacement value; if the electronic device collects both a thrust value and a displacement value, it is possible to generate a to-be-detected curve corresponding to the thrust value and/or a to-be-detected curve corresponding to the displacement value.

330, Detecting a to-be-detected curve corresponding to the thrust value and/or a to-be-detected curve corresponding to the displacement value based on historical detection data, to obtain the detection results corresponding to each to-be-detected curve, the historical detection data being detection data from a historical process of a cell being pushed into the battery housing without occurrence of any abnormity.

The electronic device detects the to-be-detected curve corresponding to the thrust value and/or the to-be-detected curve corresponding to the displacement value based on historical detection data, thereby obtaining the detection results corresponding to each to-be-detected curve. Specifically, for the to-be-detected curve corresponding to the thrust value, the electronic device may use historical thrust values to detect the to-be-detected curve corresponding to the thrust value, to obtain detection results of the to-be-detected curve corresponding to the thrust value; wherein, the electronic device may plot a historical thrust value curve based on historical thrust values, compare this historical thrust value curve with the to-be-detected curve corresponding to the thrust value to obtain the detection results of the to-be-detected curve corresponding to the thrust value; alternatively, the electronic device may compare the historical thrust values with the thrust values of each peak (or the highest peak) in the to-be-detected curve corresponding to the thrust value, and/or the thrust values of each trough (or the lowest trough), and/or the number of peaks/troughs in the to-be-detected curve corresponding to the thrust value, to obtain the detection results of the to-be-detected curve corresponding to the thrust value. Similarly, for the to-be-detected curve corresponding to the displacement value, the electronic device may use historical displacement values to detect the to-be-detected curve corresponding to the displacement value, obtaining detection results of the to-be-detected curve corresponding to the displacement value; wherein, the electronic device may plot a historical displacement value curve based on historical displacement values, compare this historical displacement value curve with the to-be-detected curve corresponding to the displacement value to obtain the detection results of the to-be-detected curve corresponding to the displacement value; alternatively, the electronic device may compare the historical displacement values with the displacement values of each peak (or the highest peak) in the to-be-detected curve corresponding to the displacement value, and/or the displacement values of each trough (or the lowest trough), and/or the number of peaks/troughs in the to-be-detected curve corresponding to the displacement value to obtain the detection results of the to-be-detected curve corresponding to the displacement value.

340, determining the abnormal results of the cell entering into the housing based on the detection results corresponding to each to-be-detected curve.

In this embodiment of the disclosure, given that only the to-be-detected curve corresponding to the thrust value is generated: if the detection result for the to-be-detected curve corresponding to the thrust value is abnormal, it is determined that the process of cell entering into battery housing is abnormal; alternatively, if the detection result for the to-be-detected curve corresponding to the thrust value is normal, it is determined that the process of cell entering into battery housing is normal. Given that only the to-be-detected curve corresponding to the displacement value is generated: if the detection result for the to-be-detected curve corresponding to the displacement value is abnormal, it is determined that the process of cell entering into battery housing is abnormal; if the detection result for the to-be-detected curve corresponding to the displacement value is normal, it is determined that the process of cell entering into battery housing is normal. If both the to-be-detected curve corresponding to the thrust value and the to-be-detected curve corresponding to the displacement value are generated, the electronic device may determine that the process of cell entering into battery housing is abnormal if the detection result for the to-be-detected curve corresponding to the thrust value is abnormal, or if the detection result for the to-be-detected curve corresponding to the displacement value is abnormal; the electronic device may also determine that the process of cell entering into battery housing is abnormal only when both the detection results of the to-be-detected curve corresponding to the thrust value and the displacement value are abnormal.

With the above embodiment employed; by using pressure values and/or displacement values as detection data, it is possible to better reflect the process conditions during the cell being pushed into the battery housing. By generating corresponding to-be-detected curves based on pressure values and/or displacement values, and detecting the corresponding to-be-detected curves based on historical detection data to ultimately determine the abnormal results of the cell entering into the battery housing, it is possible to more accurately judge the abnormal state in the process of cell entering into battery housing, improving the accuracy of the cell entering abnormity judgment.

In some embodiments, when the electronic device executes the detection of the to-be-detected curve corresponding to the thrust values and/or the to-be-detected curve corresponding to the displacement values based on historical detection data, to obtain the detection results corresponding to each to-be-detected curve, it may include the following steps:

Generating, based on historical detection data, a standard curve corresponding to the thrust value and/or a standard curve corresponding to the displacement value, and determining slope thresholds corresponding to each of the standard curves based on the same;

Determining slopes of each to-be-detected curve and comparing them with a slope threshold corresponding thereto, to obtain a slope comparison result for the to-be-detected curve corresponding to the thrust value and/or a slope comparison result for the to-be-detected curve corresponding to the displacement value;

Determining similarities between each to-be-detected curve and a standard curve corresponding thereto, and comparing each similarity with a similarity threshold to obtain a similarity comparison result for the to-be-detected curve corresponding to the thrust value and/or a similarity comparison result for the to-be-detected curve corresponding to the displacement value;

Obtaining detection results corresponding to each to-be-detected curve based on the slope comparison results and the similarity comparison results.

In an embodiment of the disclosure, the historical detection data corresponding to the detection data may include historical thrust values and historical displacement values. The electronic device may generate a standard curve corresponding to the thrust value based on the historical thrust values, and/or generate a standard curve corresponding to the displacement value based on the historical displacement values. Then the electronic device determines the slope threshold for each standard curve.

The electronic device determines the slope of the to-be-detected curve corresponding to the thrust value and compares the slope of the to-be-detected curve corresponding to the thrust value with the slope threshold of the standard curve corresponding to the thrust value to obtain the slope comparison result for the to-be-detected curve corresponding to the thrust value; and/or, the electronic device determines the slope of the to-be-detected curve corresponding to the displacement value and compares the slope of the to-be-detected curve corresponding to the displacement value with the slope threshold of the standard curve corresponding to the displacement value to obtain the slope comparison result for the to-be-detected curve corresponding to the displacement value.

The electronic device may determine the similarity between the to-be-detected curve corresponding to the thrust value and the standard curve corresponding to the thrust value, and compare the similarity with the similarity threshold to obtain the similarity comparison result for the to-be-detected curve corresponding to the thrust value; and/or, the electronic device may determine the similarity between the to-be-detected curve corresponding to the displacement value and the standard curve corresponding to the displacement value, and compare the similarity with the similarity threshold to obtain the similarity comparison result for the to-be-detected curve corresponding to the displacement value.

By the above method, the electronic device may obtain the slope comparison result and the similarity comparison result for the to-be-detected curve corresponding to the thrust value, and/or the slope comparison result and the similarity comparison result for the to-be-detected curve corresponding to the displacement value. The electronic device may determine the detection result for the to-be-detected curve corresponding to the thrust value based on the slope comparison result and the similarity comparison result for the to-be-detected curve corresponding to the thrust value. The electronic device may determine the detection result for the to-be-detected curve corresponding to the displacement value based on the slope comparison result and the similarity comparison result for the to-be-detected curve corresponding to the displacement value.

Specifically, for a to-be-detected curve, if the slope comparison result or the similarity comparison result is abnormal, it is determined that the detection result corresponding to the to-be-detected curve is abnormal; alternatively, it is determined that the detection result corresponding to the to-be-detected curve is abnormal only when both the slope comparison result and the similarity comparison result are abnormal.

With the above embodiment employed, by constructing standard curves corresponding to thrust values and/or displacement values, and comparing the slope and overall similarity between the to-be-detected curves and the corresponding standard curves, the accuracy of the analysis of the to-be-detected curves can be further improved, and the analysis and detection of the to-be-detected curves can be carried out more efficiently, improving the efficiency of the entire cell entering abnormity detection process.

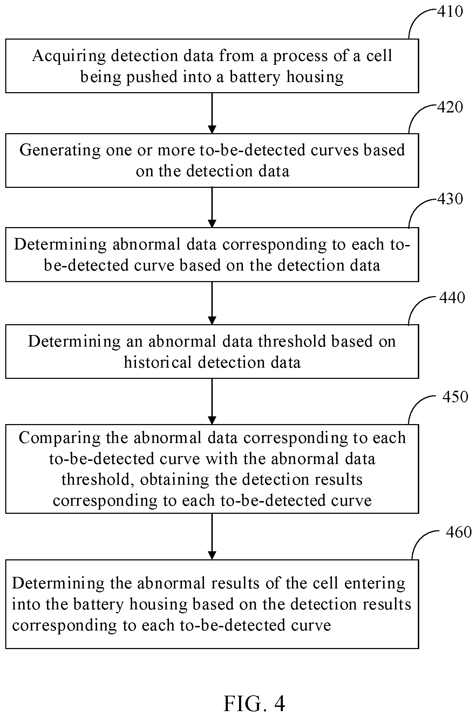

In one embodiment, refer to FIG. 4, which is a flowchart of another abnormity detection method for cell entering into battery housing provided in this embodiment of the disclosure, which can be applied to the aforementioned electronic device 10. As shown in FIG. 4, the method may include the following steps:

410, acquiring detection data from a process of the battery cell being pushed into the battery housing.

420, generating one or more to-be-detected curves based on the detection data.

430, determining abnormal data corresponding to each to-be-detected curve based on the detection data.

In this embodiment of the disclosure, the electronic device determines the abnormal data corresponding to each to-be-detected curve based on the detection data. Specifically, the electronic device may match the data characteristics of the detection data with different data characteristics corresponding to the abnormal data. Each data characteristic corresponding to the abnormal data may correspond to an abnormal data point. There may be one or more abnormal data corresponding to each to-be-detected curve.

440, Determining an abnormal data threshold based on historical detection data.

In this embodiment of the disclosure, the abnormal data threshold may be determined based on historical detection data. For example, the electronic device may match the data characteristics of the historical detection data with different data characteristics corresponding to the abnormal data, and determine the abnormal data with the highest matching degree as the abnormal data threshold. Alternatively, select historical detection data that meet the data characteristics of abnormal data from the historical detection data, and determine the abnormal data threshold from the selected historical detection data by choosing the maximum value or calculating the average value, etc.

450, Comparing the abnormal data corresponding to each to-be-detected curve with the abnormal data threshold to obtain the detection results corresponding to each to-be-detected curve.

In this embodiment of the disclosure, the electronic device compares the abnormal data corresponding to each to-be-detected curve with the abnormal data threshold to obtain the detection results corresponding to each to-be-detected curve. Specifically, when the abnormal data corresponding to a to-be-detected curve is greater than the abnormal data threshold, the electronic device may determine the detection result corresponding to the to-be-detected curve as abnormal; or, when the abnormal data corresponding to a to-be-detected curve is less than the abnormal data threshold, the electronic device may determine the detection result corresponding to the to-be-detected curve as abnormal; this is not specifically limited.

With the above embodiment employed, by determining the abnormal data corresponding to the to-be-detected curves, and determining the detection results corresponding to each to-be-detected curve based on the comparison results between the abnormal data and the abnormal data threshold determined from the historical detection data, judging the abnormity of the process of cell entering into battery housing through comparison of specific data, it is possible to more accurately determine the abnormal state of the process of cell entering into battery housing, improving the accuracy of the cell entering abnormity judgment.

In some embodiments, the abnormal data includes jam values and burr values, and the abnormal data threshold includes jam thresholds and burr thresholds.

The electronic device executes the step of comparing the abnormal data corresponding to each to-be-detected curve with the abnormal data threshold to obtain the detection results corresponding to each to-be-detected curve, which may include the following steps:
comparing jam values corresponding to each of the to-be-detected curves with the jam threshold to obtain a jam comparison result corresponding to each of the to-be-detected curves;
comparing burr values corresponding to each of the to-be-detected curves with the burr threshold to obtain a burr comparison result corresponding to each of the to-be-detected curves; and
obtaining detection results corresponding to each of the to-be-detected curves based on the jam comparison result and the burr comparison result corresponding to each of the to-be-detected curves.

In this embodiment of the disclosure, the electronic device determines the jam value and burr value of the to-be-detected curve based on the detection data such as thrust value and displacement value used to generate the to-be-detected curve. Specifically, the electronic device may detect the peaks of the to-be-detected curve to match the peak with the curve characteristics of burrs and jams. If the match is successful, the jam value and burr value of the to-be-detected curve are determined based on the detection data corresponding to the peak. Each to-be-detected curve may include several jam values and burr values.

The electronic device determines the burr threshold and jam threshold based on the historical detection data, where the electronic device may generate a standard curve based on the historical detection data, and determine the jam value and burr value of the standard curve according to the method of determining the jam value and burr value of the to-be-detected curve mentioned above, determine the jam threshold based on each jam value, and determine the burr threshold based on each burr value. For example, the maximum jam value of the standard curve is determined as the jam threshold, and the maximum burr value of the standard curve is determined as the burr threshold.

The electronic device compares the jam value corresponding to each to-be-detected curve with the jam threshold to obtain the jam comparison result for each to-be-detected curve; and compares the burr value corresponding to each to-be-detected curve with the burr threshold to obtain the burr comparison result for each to-be-detected curve. Based on the jam comparison result and the burr comparison result corresponding to each to-be-detected curve, the electronic device obtains the detection results corresponding to each to-be-detected curve.

Specifically, for a to-be-detected curve, if it has only one jam value, the electronic device may determine the jam comparison result for the to-be-detected curve based on that jam value; alternatively, if it has more than one jam value, the electronic device may determine the jam comparison result for the to-be-detected curve based on the number of jam values that do not meet the jam threshold, for example, if more than half of the jam values are greater than the jam threshold, the jam comparison result is abnormal. Similarly, for a to-be-detected curve, if it has only one burr value, the electronic device may determine the burr comparison result for the to-be-detected curve based on that burr value; if it has more than one burr value, the electronic device may determine the burr comparison result for the to-be-detected curve based on the number of burr values that do not meet the burr threshold.

The electronic device obtains the detection results corresponding to each to-be-detected curve based on the jam comparison result and the burr comparison result corresponding to each to-be-detected curve. Specifically, for a to-be-detected curve, if the jam comparison result corresponding thereto or the burr comparison result corresponding thereto is abnormal, it is determined that the detection result corresponding to the to-be-detected curve is abnormal; alternatively, if both the jam comparison result and the burr comparison result corresponding to the to-be-detected curve are abnormal, it is determined that the detection result corresponding to the to-be-detected curve is abnormal.

Since burr and jam phenomena are the major abnormalities in the battery cell assembly process, adopting the above embodiment to determine the detection results corresponding to each to-be-detected curve through the comparison of burr values and jam values can more accurately determine the abnormal state of the process of cell entering into battery housing, improving the accuracy of the battery cell entering abnormity judgment.

460, determining the abnormal results of the cell entering into the battery housing based on the detection results corresponding to each to-be-detected curve.

In some embodiments, the abnormity detection method may also include the following steps:
determining a first quantity of jam values greater than the jam threshold in a target to-be-detected curve based on the jam comparison result corresponding to the target to-be-detected curve, the target to-be-detected curve being any of the to-be-detected curves;
determining a second quantity of burr values greater than the burr threshold in the target to-be-detected curve based on the burr comparison result corresponding to the target to-be-detected curve;
determining an abnormity score corresponding to the target to-be-detected curve based on the first quantity, a weight of the jam comparison result, the second quantity, and a weight of the burr comparison result, wherein the weight of the jam comparison result is greater than the weight of the burr comparison result; and
determining an abnormity grade of the cell entering into battery housing based on the abnormity score corresponding to each of the to-be-detected curves.

In this embodiment of the disclosure, the to-be-detected curve may include one or more jam values and one or more burr values. For any to-be-detected curve, that is, the target to-be-detected curve, after the electronic device determines the jam comparison result based on the jam values contained in the target to-be-detected curve, it is possible to count the number of jam values in the target to-be-detected curve that are greater than the jam threshold, which is the first quantity; similarly, for the target to-be-detected curve, after the electronic device determines the burr comparison result based on the burr values contained in the target to-be-detected curve, it is possible to count the number of burr values in the target to-be-detected curve that are greater than the burr threshold, which is the second quantity.

Next, the electronic device may calculate the abnormity score corresponding to the target to-be-detected curve based on the first quantity, the second quantity, the weight of the jam comparison result, and the weight of the burr comparison result, and determine the abnormity grade of the cell entering into the housing based on the abnormity score corresponding to each to-be-detected curve. Since jamming is a more abnormal situation in the process of cell entering into battery housing, the weight of the jam comparison result is greater than the weight of the burr comparison result.

Specifically, the electronic device counts the first quantity for to-be-detected curve "a" as 1, and the second quantity as 1, with the weight of the jam comparison result being 2 and the weight of the burr comparison result being 1. Therefore, the abnormity score corresponding to to-be-detected curve "a" is 1*2+1*1=3. The electronic device counts the first quantity for to-be-detected curve "b" as 2, and the second quantity as 2. Therefore, the abnormity score corresponding to to-be-detected curve "b" is 2*2+2*1=7. Different abnormity grades correspond to different abnormity score ranges, and the electronic device may determine the abnormity grade of the cell entering into the housing based on the range where the abnormity score is 10.

With the above embodiment employed, by assigning different weights to the jam comparison results and burr comparison results, and determining the abnormity grade of the cell entering into the battery housing based on the number of jam comparison results and burr comparison results in the process of cell entering into battery housing, it is possible to more effectively analyze the degree of abnormity for each cell entering the battery housing, thereby better improving the problems in the process and further enhancing the level of intellectualization in the abnormity detection process of the cell entering into the housing.

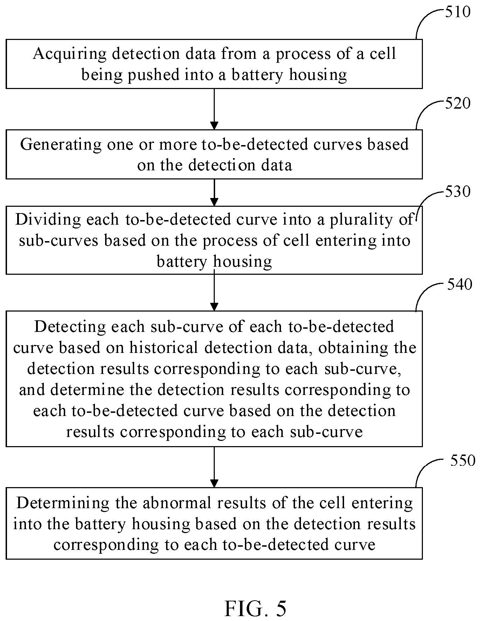

In one embodiment, referring to Figure 5, which is a flowchart of another abnormity detection method for cell entering into battery housing provided in this embodiment of the disclosure, which may be applied to the aforementioned electronic device 10. As shown in Figure 5, the method may include the following steps:
510, Acquiring detection data from a process of a cell being pushed into a battery housing.
520, Generating one or more to-be-detected curves based on the detection data.
530, dividing each to-be-detected curve into a plurality of sub-curves based on the process of cell entering into battery housing, each sub-curve corresponding to a sub-process of the process of the cell entering into battery housing.
540, detecting each sub-curve of each to-be-detected curve based on historical detection data, obtaining the detection results corresponding to each sub-curve, and determining the detection results corresponding to each to-be-detected curve based on the detection results corresponding to each sub-curve. The historical detection data is the detection data from a historical process of the cell being pushed into the battery housing without occurrence of any abnormity.

In this embodiment of the disclosure, the electronic device divides each generated to-be-detected curve into multiple sub-curves according to the process of cell entering into the battery housing, where each sub-curve corresponds to a sub-process of the process of cell entering into the battery housing. Specifically, the sub-processes of the process of cell entering into the battery housing include one or more of an initial position, a pole column adhesion position, a housing entry preparation position, a housing entry mold opening position, and a housing entry completion position; if the sub-processes of the process of the cell entering into the battery housing include all of the above, then the electronic device may divide each to-be-detected curve into six sub-curves.

For each sub-curve, the electronic device may detect the sub-curve based on the stored historical detection data to obtain the detection results corresponding to each sub-curve. Then the electronic device determines the detection results corresponding to each to-be-detected curve based on the detection results of each sub-curve. Specifically, for a to-be-detected curve divided into six sub-curves, the electronic device may draw six standard sub-curves based on the historical detection data, compare each standard sub-curve with the corresponding sub-curve to obtain the detection results for each sub-curve, and then determine the detection results corresponding to the to-be-detected curve based on the detection results of each sub-curve. For example, if the detection result corresponding to one sub-curve of the to-be-detected curve is abnormal, the electronic device will judge the detection result corresponding to the to-be-detected curve as abnormal; alternatively, if a certain number of sub-curves of the to-be-detected curve have corresponding detection results that are abnormal, the electronic device will judge the detection result corresponding to the to-be-detected curve as abnormal; alternatively, the electronic device will only judge the detection result corresponding to the to-be-detected curve as abnormal when all sub-curves have corresponding abnormal detection results.

With the above embodiment employed, by dividing the to-be-detected curve into multiple sub-curves for abnormity analysis, it is possible to effectively reflect the process where abnormity occurs in the housing entry process, to determine the major abnormity issues, further improving the accuracy of the abnormity detection process based on the abnormity analysis results of multiple sub-curves.

550, determining the abnormal results of the cell entering into the battery housing based on the detection results corresponding to each to-be-detected curve.

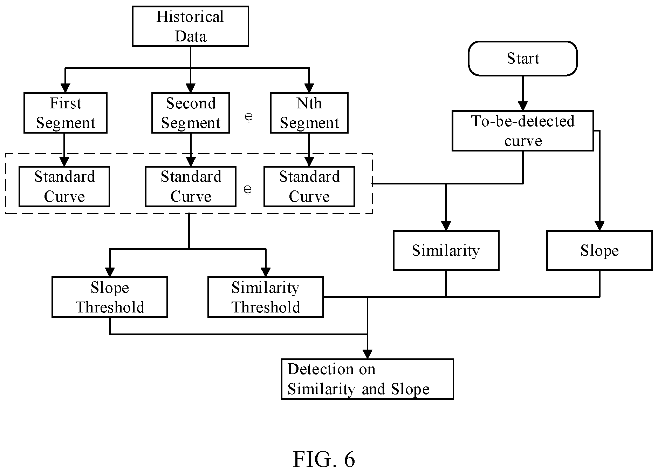

Referring to Figure 6, which is a schematic diagram of a curve abnormity detection process provided in an embodiment of the disclosure. In some embodiments, the electronic device performs a process of respectively detecting each sub-curve of each to-be-detected curve based on historical detection data, obtaining detection results corresponding to each sub-curve of each to-be-detected curve, and determining detection results corresponding to each to-be-detected curve based on the detection results corresponding to each sub-curve, which may include the following steps:
Generating standard sub-curves corresponding to each sub-curve based on the historical detection data, and determine slope thresholds based on each standard sub-curve;
Determining the slope of each of the sub-curves and comparing slopes of each of the sub-curves with the slope thresholds to obtain a slope comparison result for each sub-curve;
Determining similarities between each sub-curve and a corresponding standard sub-curve, and comparing each similarity with a similarity threshold to obtain a similarity comparison result for each sub-curve; and
Obtaining detection results corresponding to each of the to-be-detected curves based on the slope comparison result and the similarity comparison result for each sub-curve.

In this embodiment of the disclosure, as shown in Figure 6, the electronic device may generate a standard curve based on historical detection data, and divide the standard curve into multiple standard sub-curves according to the multiple sub-processes of the process of cell entering into the battery housing, where each standard sub-curve corresponds one-to-one with a sub-curve in the to-be-detected curve.

The electronic device may determine the maximum slope of each standard sub-curve, and determine a slope threshold based on each maximum slope. Optionally, a slope threshold may be determined by statistical methods, such as selecting the maximum value, selecting the minimum value, or calculating the average value. For each sub-curve, the electronic device may take the maximum slope or the average slope of the sub-curve as the slope of the sub-curve, and compare this slope with the slope threshold to obtain the slope comparison result for each sub-curve. Specifically, the electronic device may judge the slope comparison result for a sub-curve with a slope greater than the slope threshold as abnormal.

The electronic device calculates the similarity between each sub-curve and the corresponding sub-curve and compares the obtained similarity with the similarity threshold to obtain the similarity comparison result for each sub-curve. Here, the similarity threshold may be an empirical value. Specifically, the electronic device may judge the similarity comparison result for a sub-curve with a similarity smaller than the similarity threshold as abnormal.

The electronic device, through the aforementioned method, can obtain the slope comparison results and similarity comparison results for each sub-curve, and determine the detection results corresponding to the to-be-detected curve based on the slope comparison results and similarity comparison results of each sub-curve. Specifically, for a to-be-detected curve divided into six sub-curves: if the slope comparison result or the similarity comparison result of a sub-curve is abnormal, it is determined that the detection result corresponding to this sub-curve is abnormal; alternatively, only when both the slope comparison result and the similarity comparison result of a sub-curve are abnormal, it is determined that the detection result corresponding to this sub-curve is abnormal. If there is an abnormal detection result corresponding to one of the sub-curves in the to-be-detected curve, then the electronic device judges the detection result corresponding to the to-be-detected curve as abnormal; alternatively, if a certain number (such as more than 3) of sub-curves in the to-be-detected curve have corresponding abnormal detection results, then the electronic device judges the detection result corresponding to the to-be-detected curve as abnormal; alternatively, only when all sub-curves in the to-be-detected curve have abnormal detection results, the electronic device judges the detection result corresponding to the to-be-detected curve as abnormal.

With the above embodiment employed; by constructing standard curves and comparing the slopes and overall similarity between the to-be-detected curves and the corresponding standard curves, it is possible to further improve the accuracy of the analysis of the to-be-detected curves, and analyze and detect the to-be-detected curves more efficiently, improving the efficiency of the entire abnormity detection process; and the accuracy of the abnormity detection process is also improved based on the abnormity analysis results of multiple sub-curves.

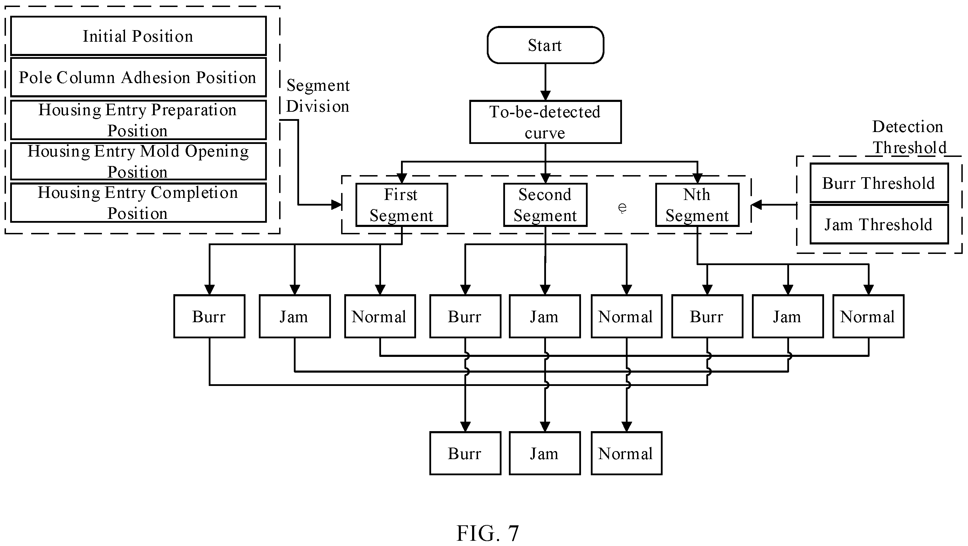

Referring to Figure 7, which is a schematic diagram of the jam and burr detection process provided in an embodiment of the disclosure. In some embodiments, the electronic device performs the steps of detecting each sub-curve of each to-be-detected curve based on historical detection data, obtaining detection results corresponding to each sub-curve of each to-be-detected curve, and determining the detection results corresponding to each to-be-detected curve based on the detection results of each sub-curve, which may include the following steps:
Determining a jam value and a burr value corresponding to each sub-curve based on the detection data;
Determining an abnormal data threshold based on historical detection data;
Comparing the jam value corresponding to each sub-curve with a jam threshold to obtain a jam comparison result for each sub-curve;
Comparing the burr value corresponding to each sub-curve with a burr threshold to obtain a burr comparison result for each sub-curve;
Obtaining detection results corresponding to each to-be-detected curve based on the jam comparison result and burr comparison result corresponding to each sub-curve.

In an embodiment of the disclosure, as shown in Figure 7, the electronic device determines the jam values and burr values for each sub-curve based on the detection data such as thrust values and displacement values based on which to generate each sub-curve. Specifically, the electronic device can detect the peaks of the sub-curves to match the peaks with the curve characteristic morphologies of burrs and jams. If the match is successful, the jam value and burr value of the sub-curve are determined based on the detection data corresponding to the peaks. Here, each sub-curve may include several jam values and burr values.

The electronic device determines the burr threshold and jam threshold based on historical detection data, where the electronic device can generate a standard curve based on the historical detection data and divide the standard curve into multiple standard sub-curves. According to the method described above for determining the jam and burr values of the sub-curves, the jam and burr values of the standard sub-curves are determined; in addition, the jam threshold is determined based on the jam values of each standard sub-curve, and the burr threshold is determined based on the burr values of each standard sub-curve. For example, the maximum jam value in the standard sub-curve is determined as the jam threshold, and the maximum burr value in the standard sub-curve is determined as the burr threshold.

The electronic device compares the jam value corresponding to each sub-curve with the jam threshold to obtain the jam comparison result for each sub-curve; and compares the burr value corresponding to each sub-curve with the burr threshold to obtain the burr comparison result for each sub-curve. Based on the jam comparison result and the burr comparison result corresponding to each sub-curve, the electronic device determines the detection results corresponding to the to-be-detected curve.

Specifically, for a to-be-detected curve divided into 6 sub-curves, each sub-curve may have one or more jam values, and the electronic device may determine the jam comparison result for the sub-curve based on each jam value thereof. Specifically, if a jam value in the sub-curve does not meet the jam threshold, then the jam comparison result is abnormal, and the jam comparison result for the sub-curve is also abnormal.

Similarly, each sub-curve may have one or more burr values, and the electronic device may determine the burr comparison result for the sub-curve based on each burr value thereof. Specifically, if a burr value in the sub-curve does not meet the burr threshold, then the burr comparison result is abnormal, and the burr comparison result for the sub-curve is also abnormal.

The electronic device obtains the detection results corresponding to each to-be-detected curve based on the jam comparison result and the burr comparison result corresponding to each sub-curve. Specifically, for a to-be-detected curve divided into 6 sub-curves: if at least one sub-curve has an abnormal jam comparison result and/or an abnormal burr comparison result, then the detection result corresponding to the to-be-detected curve is also abnormal; alternatively, if both the jam comparison result and the burr comparison result for each sub-curve are normal, then the detection result corresponding to the to-be-detected curve is also normal. More specifically, if at least one sub-curve has an abnormal jam comparison result, and the burr comparison results for all sub-curves are normal, then the detection result corresponding to the to-be-detected curve is jammed; if at least one sub-curve has an abnormal burr comparison result and the jam comparison results for all sub-curves are normal, then the detection result corresponding to the to-be-detected curve is burred.

With the above embodiment employed; by judging the abnormity of the battery cell by comparing the jam values and burr values, it is possible to more accurately determine the abnormal state of the process of cell entering into battery housing, improving the accuracy of the abnormity judgment on the cell entering into battery housing; and also improving the accuracy of the abnormity detection process based on abnormity analysis on the basis of the abnormity analysis results of multiple sub-curves.

In some embodiments, the abnormity detection method may also include the following steps:
Determining the number of jam values in the target sub-curve that are greater than the jam threshold based on the jam comparison result corresponding to the target sub-curve, the target sub-curve being any one of the sub-curves;
Determining the number of burr values in the target sub-curve that are greater than the burr threshold based on the burr comparison result corresponding to the target sub-curve;
Based on the number of jam values in the target sub-curve that are greater than the jam threshold, the weight of the jam comparison result, the number of burr values in the target sub-curve that are greater than the burr threshold, and the weight of the burr comparison result, determining the abnormity score corresponding to the target sub-curve, and determine the abnormity score corresponding to each to-be-detected curve based on the abnormity score corresponding to each sub-curve, wherein the weight of the jam comparison result is greater than the weight of the burr comparison result;
Determining an abnormity grade of the cell entering into battery housing based on the abnormity score corresponding to each to-be-detected curve.

In this embodiment of the disclosure, the to-be-detected curve can be divided into multiple sub-curves, each sub-curve may include one or more jam values, and may also include one or more burr values. For any sub-curve, that is, the target sub-curve, after the electronic device determines the jam comparison result based on the jam values contained in the target sub-curve, it can count the number of jam values in the target sub-curve that are greater than the jam threshold; similarly, after the electronic device determines the burr comparison result based on the burr values contained in the target sub-curve, it can count the number of burr values in the target sub-curve that are greater than the burr threshold.

Then, the electronic device can calculate the abnormity score corresponding to the target sub-curve based on the number of jam values in the target sub-curve that are greater than the jam threshold, the weight of the jam comparison result, the number of burr values in the target sub-curve that are greater than the burr threshold, and the weight of the burr comparison result, and determine the abnormity grade of the cell entering into battery housing based on the abnormity score. Here, since jamming is a more abnormal situation in the process of the cell entering into battery housing, the weight of the jam comparison result is greater than the weight of the burr comparison result.

Specifically, the to-be-detected curve is divided into 6 sub-curves, and the electronic device counts the number of jam values greater than the jam threshold in all sub-curves as 2, and the number of burr values greater than the burr threshold is also 2, with the weight of the jam comparison result being 2 and the weight of the burr comparison result being 1. Therefore, the abnormity score is 2*2+2*1=7, and thus the abnormity score corresponding to the to-be-detected curve is 2*2+2*1=7. Different abnormity grades correspond to different ranges of abnormity scores, and the electronic device can determine the abnormity grade of the cell entering into battery housing based on the range where the abnormity score is 7.

With the above embodiment employed, by assigning different weights to the jam comparison results and burr comparison results, and determining the abnormity grade of the process of cell entering into battery housing based on the number of jam comparison results and the number of burr comparison results in the process of the cell entering into battery housing, it is possible to more effectively analyze the degree of abnormity for each process of cell entering into battery housing. This leads to better improvement of the existing problems in the process, further enhancing the intellectualization level of the abnormity detection for the process of cell entering into battery housing. Moreover, the accuracy of the abnormity detection process is also improved based on the abnormity analysis results of multiple sub-curves.

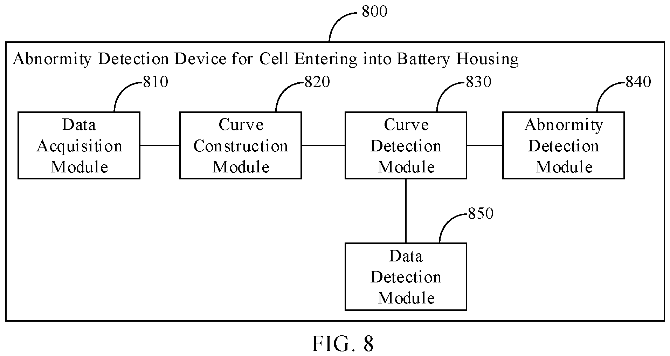

Referring to Figure 8, which is a schematic diagram of the structure of an abnormity detection device for cell entering into battery housing provided in an embodiment of the disclosure, and the abnormity detection device can be applied to electronic device 10. As shown in Figure 8, the abnormity detection device 800 may include: a data acquisition module 810, a curve construction module 820, a curve detection module 830, and an abnormity detection module 840.
Data acquisition module 810, for acquiring detection data from a process of the battery cell being pushed into the battery housing;
Curve construction module 820, for generating one or more to-be-detected curves based on the detection data;
Curve detection module 830, for detecting the one or more to-be-detected curves respectively based on historical detection data to obtain detection results corresponding to each of the to-be-detected curves; the historical detection data being detection data from a historical process of the cell being pushed into the battery housing without occurrence of any abnormity;
Abnormity detection module 840, for determining an abnormity result of the cell entering into battery housing based on the detection results corresponding to each of the to-be-detected curves.

In some embodiments, the detection data includes a displacement value and/or a thrust value of the cell being pushed into the battery housing.

The curve construction module 820 is also used for:
generating a to-be-detected curve corresponding to a thrust value based on the thrust value, and/or, generating a to-be-detected curve corresponding to a displacement value based on the displacement value.

In some embodiments, curve detection module 830 is also used for:
generating standard curves corresponding to each of the to-be-detected curves based on the historical detection data, and determining slope thresholds corresponding to each standard curve based on the same;
determining slopes of each of the to-be-detected curves and comparing the slopes of each of the to-be-detected curves with a slope threshold corresponding thereto to obtain a slope comparison result for each of the to-be-detected curves;
determining similarities between each of the to-be-detected curves and a standard curve corresponding thereto, and comparing each similarity with a similarity threshold to obtain a similarity comparison result for each of the to-be-detected curves; and
obtaining detection results corresponding to each of the to-be-detected curves based on the slope comparison result and the similarity comparison result for each of the to-be-detected curves.

In some embodiments, the abnormity detection device shown in Figure 8 also includes:

Data detection module 850, for determining abnormal data corresponding to each of the to-be-detected curve based on the detection data;

The curve detection module 830 is also used for:
determining an abnormal data threshold based on the historical detection data; and
comparing the abnormal data corresponding to each of the to-be-detected curves with the abnormal data threshold to obtain the detection results corresponding to each of the to-be-detected curves.

In some embodiments, the abnormal data includes jam values and burr values, and the abnormal data threshold includes a jam threshold and a burr threshold;

The curve detection module 830 is also used for:
comparing jam values corresponding to each of the to-be-detected curves with the jam threshold to obtain a jam comparison result corresponding to each of the to-be-detected curves;
comparing burr values corresponding to each of the to-be-detected curves with the burr threshold to obtain a burr comparison result corresponding to each of the to-be-detected curves; and
obtaining detection results corresponding to each of the to-be-detected curves based on the jam comparison result and the burr comparison result corresponding to each of the to-be-detected curves.

In some embodiments, the abnormity detection module 840 is also used for:
determining a first quantity of jam values greater than the jam threshold in a target to-be-detected curve based on the jam comparison result corresponding to the target to-be-detected curve, the target to-be-detected curve being any of the to-be-detected curves;
determining a second quantity of burr values greater than the burr threshold in the target to-be-detected curve based on the burr comparison result corresponding to the target to-be-detected curve;
determining an abnormity score corresponding to the target to-be-detected curve based on the first quantity, a weight of the jam comparison result, the second quantity, and a weight of the burr comparison result, wherein the weight of the jam comparison result is greater than the weight of the burr comparison result; and
determining an abnormity grade of the cell entering into battery housing based on the abnormity score corresponding to each of the to-be-detected curves.

In some embodiments, the curve construction module 820 is also used for:

After the generating one or more to-be-detected curves based on the detection data, dividing each of the to-be-detected curves into a plurality of sub-curves according to a process of cell entering into battery housing, the plurality of sub-curves being in one-to-one correspondence to a plurality of sub-processes of the process of the cell entering into battery housing.

The curve detection module 830 is also used for:
detecting each sub-curve of each of the to-be-detected curves based on the historical detection data to obtain detection results corresponding to each sub-curve of each of the to-be-detected curves, and determining detection results corresponding to each of the to-be-detected curves based on the detection results corresponding to each of the sub-curves.

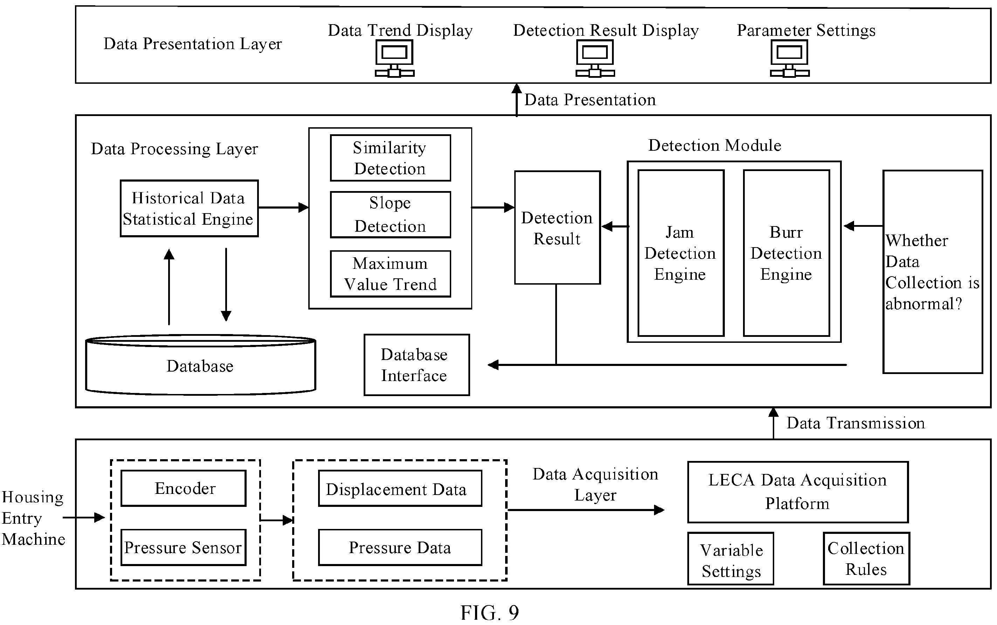

Refer to Figure 9, which is an architectural diagram of the abnormity detection system for cell entering into battery housing provided in this embodiment of the disclosure. As shown in Figure 9, the system includes a data acquisition layer, a data processing layer, and a data presentation layer.

The data acquisition layer obtains, through an encoder, displacement data of the cell being pushed into the battery housing, and obtains, through a pressure sensor, thrust data of the cell being pushed into the battery housing. Here, the data acquisition layer also includes a data acquisition platform, which can collect thrust data and displacement data according to preset collection rules and variable settings.

The data acquisition layer transmits the displacement data and pressure data to the data processing layer via data transmission. The data processing layer includes a detection module, a historical data statistical engine, and a database. The data processing layer can first determine whether there is an abnormity in the collection process, specifically whether devices such as encoders and pressure sensors are malfunctioning; if not, the data is transmitted to the detection module. The detection module may first generate to-be-detected curves, and determine the jam values and burr values of the to-be-detected curves based on the detection data such as thrust values and displacement values used to generate the to-be-detected curves. Then, the jam detection engine in the detection module can compare the jam values corresponding to each to-be-detected curve with the jam threshold to obtain the jam comparison results for each to-be-detected curve; the burr detection engine in the detection module can compare the burr values corresponding to each to-be-detected curve with the burr threshold to obtain the burr comparison results for each to-be-detected curve.

At the same time, the historical data statistical engine can obtain historical detection data from the database and generate one or more standard curves based on the historical detection data, which correspond one-to-one with the to-be-detected curves. The data processing layer can determine the slope of each to-be-detected curve and compare the slope of each to-be-detected curve with the slope threshold of the corresponding standard curve to obtain the slope comparison results for each to-be-detected curve. Moreover, the data processing layer can determine the similarity between each to-be-detected curve and the corresponding standard curve, and compare each similarity with the similarity threshold to obtain the similarity comparison results for each to-be-detected curve. The data processing layer can also detect a maximum value trend of abnormity of pressure data, judge the changes during the process of cell entering into battery housing, and determine whether the process of cell entering into battery housing is abnormal.

The data processing layer determines the detection results corresponding to the to-be-detected curves based on the jam comparison results, burr comparison results, similarity detection results, slope detection results, and maximum value trend detection results which are obtained above.

The data presentation layer may include multiple terminal devices or display devices, which are used to display data trends, detection results, and parameter settings in the process of cell entering into battery housing and in the process of abnormity detection, so as to achieve real-time monitoring of the abnormity detection results and ensure the efficiency of the process of cell entering into battery housing.

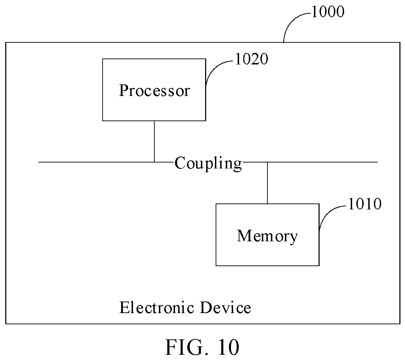

Referring to FIG. 10, which is a schematic diagram of a structure of an electronic device provided in an embodiment of the disclosure. As shown in FIG. 10, the electronic device 1000 may include:

A memory 1010 having an executable program code stored thereon;

A processor 1020 coupled with the memory 1010;

Here, the processor 1020 invokes the executable program code stored in the memory 1010 to perform any abnormity detection method provided in an embodiment of the disclosure.

An embodiment of the disclosure provides a computer-readable storage medium storing a computer program, wherein the computer program enables a computer to execute any abnormity detection method provided in embodiments of the disclosure.

An embodiment of the disclosure provides a computer program product, which includes a non-transitory computer-readable storage medium storing a computer program, and the computer program is operable to cause a computer to execute any abnormity detection method provided in embodiments of the disclosure.

It should be understood that the term "one embodiment" or "an embodiment" mentioned throughout the specification refers to specific features, structures, or characteristics that are included in at least one embodiment of the present disclosure. Therefore, the phrases "in one embodiment" or "in an embodiment" appearing throughout the specification do not necessarily refer to the same embodiment. Moreover, these specific features, structures, or characteristics may be combined in any suitable manner in one or more embodiments. Those skilled in the art should also appreciate that the examples described in the specification are all optional implementations, and the actions and modules involved are not necessarily essential to the present disclosure.

In the various embodiments of the present disclosure, it should be understood that the numerical order of the processes does not necessarily imply the order of execution. The execution order of the processes should be determined by their functions and inherent strategies, without imposing any limitations on the implementation process of the embodiments of the present disclosure.

The units described as separate components may be physically separated or not, and the components shown as units may be physical units or not, that is, they may be located in one place or distributed across multiple network units. Some or all of these units may be selected to achieve the purpose of the present embodiment according to actual needs.

Furthermore, in the various embodiments of the present disclosure, the functional units may be integrated into one processing unit, may exist separately physically, or two or more units may be integrated into one unit. The integrated units may be implemented in the form of hardware or in the form of software functional units.

If the integrated units are implemented in the form of software functional units and sold or used as independent products, they may be stored in a computer-accessible memory. Based on this understanding, the essence of the technical solution of the present disclosure, or the part that contributes to the prior art, or the whole or part of the technical solution, may be implemented in the form of a software product, which is stored in a memory and includes several requests to enable a computer device (which may be a personal computer, server, or network device, etc., specifically the processor in the computer device) to execute some or all of the steps of the method in each embodiment of the present disclosure.

Those skilled in the art can understand that all or part of the steps in the various methods of the present embodiment may be completed by instructing relevant hardware through a program, which may be stored in a computer-readable storage medium. The storage medium includes Read-Only Memory (ROM), Random Access Memory (RAM), Programmable Read-only Memory (PROM), Erasable Programmable Read Only Memory (EPROM), One-time Programmable Read-Only Memory (OTPROM), Electrically-Erasable Programmable Read-Only Memory (EEPROM), Compact Disc Read-Only Memory (CD-ROM) or other optical disc storage devices, magnetic disk storage devices, tape storage devices, or any other computer-readable media that may be used to carry or store data.

The above provides a detailed introduction to an abnormity detection method and device for cell entering into battery housing, an electronic device and a storage medium as provided in embodiments of the present disclosure. Specific examples are used in this specification to illustrate the principles and implementations of the present disclosure. The descriptions of the above embodiments are only for the purpose of helping to understand the methods and core concepts of the present disclosure. At the same time, for those of ordinary skills in the art, variations may be made in specific implementations and application scope based on the inventive concepts of the present disclosure. In summary, the content of this specification shall not be understood as a limitation to the present disclosure.

## Claims

1. An abnormity detection method for cell entering into battery housing, **characterized by** comprising:
acquiring detection data from a process of a cell being pushed into a battery housing;
generating one or more to-be-detected curves based on the detection data;
detecting the one or more to-be-detected curves respectively based on historical detection data to obtain detection results corresponding to each of the to-be-detected curves, the historical detection data being detection data from a historical process of the cell being pushed into the battery housing without occurrence of any abnormity; and
determining an abnormal result of the cell entering into battery housing based on the detection results corresponding to each of the to-be-detected curves.

2. The method of claim 1, **characterized in that** the detection data comprises a displacement value and/or a thrust value of the cell being pushed into the battery housing;
the generating one or more to-be-detected curves based on the detection data comprises:
generating a to-be-detected curve corresponding to a thrust value based on the same, and/or
generating a to-be-detected curve corresponding to a displacement value based on the same.

3. The method of claim 1, **characterized in that** the detecting the one or more to-be-detected curves respectively based on the historical detection data to obtain the detection results corresponding to each of the to-be-detected curves comprises:
generating standard curves corresponding to each of the to-be-detected curves based on the historical detection data, and determining slope thresholds corresponding to each of the standard curves based on the same;
determining slopes of each of the to-be-detected curves and comparing the slopes of each of the to-be-detected curves with a slope threshold corresponding thereto to obtain a slope comparison result for each of the to-be-detected curves;
determining similarities between each of the to-be-detected curves and a standard curve corresponding thereto, and comparing each similarity with a similarity threshold to obtain a similarity comparison result for each of the to-be-detected curves; and
obtaining detection results corresponding to each of the to-be-detected curves based on the slope comparison result and the similarity comparison result for each of the to-be-detected curves.

4. The method of claim 1, **characterized by** further comprising:
determining abnormal data corresponding to each of the to-be-detected curves based on the detection data;
the detecting the one or more to-be-detected curves based on the historical detection data to obtain the detection results corresponding to each of the to-be-detected curves comprises:
determining an abnormal data threshold based on the historical detection data;
comparing the abnormal data corresponding to each of the to-be-detected curves with the abnormal data threshold to obtain the detection results corresponding to each of the to-be-detected curves.

5. The method of claim 4, **characterized in that** the abnormal data comprises jam values and burr values, and the abnormal data threshold comprises a jam threshold and a burr threshold;
the comparing the abnormal data corresponding to each of the to-be-detected curves with the abnormal data threshold to obtain the detection results corresponding to each of the to-be-detected curves comprises:
comparing jam values corresponding to each of the to-be-detected curves with the jam threshold to obtain a jam comparison result corresponding to each of the to-be-detected curves;
comparing burr values corresponding to each of the to-be-detected curves with the burr threshold to obtain a burr comparison result corresponding to each of the to-be-detected curves; and
obtaining detection results corresponding to each of the to-be-detected curves based on the jam comparison result and the burr comparison result corresponding to each of the to-be-detected curves.

6. The method of claim 5, **characterized by** further comprising:
determining a first quantity of jam values greater than the jam threshold in a target to-be-detected curve based on the jam comparison result corresponding to the target to-be-detected curve, the target to-be-detected curve being any of the to-be-detected curves;
determining a second quantity of burr values greater than the burr threshold in the target to-be-detected curve based on the burr comparison result corresponding to the target to-be-detected curve;
determining an abnormity score corresponding to the target to-be-detected curve based on the first quantity, a weight of the jam comparison result, the second quantity, and a weight of the burr comparison result, wherein the weight of the jam comparison result is greater than the weight of the burr comparison result; and
determining an abnormity grade of the cell entering into battery housing based on the abnormity score corresponding to each of the to-be-detected curves.

7. The method of any one of claims 1 to 6, **characterized in that** after the generating one or more to-be-detected curves based on the detection data, the method further comprises:
dividing each of the to-be-detected curves into a plurality of sub-curves according to a process of cell entering into battery housing, the plurality of sub-curves being in one-to-one correspondence to a plurality of sub-processes of the process of the cell entering into battery housing; and
the detecting the one or more to-be-detected curves respectively based on the historical detection data to obtain the detection results corresponding to each of the to-be-detected curves comprises:
detecting each sub-curve of each of the to-be-detected curves based on the historical detection data to obtain detection results corresponding to each sub-curve of each of the to-be-detected curves, and determining detection results corresponding to each of the to-be-detected curves based on the detection results corresponding to each of the sub-curves.

8. An abnormity detection device for cell entering into battery housing, **characterized by** comprising:
a data acquisition module for acquiring detection data from a process of a cell being pushed into a battery housing;
a curve construction module for generating one or more to-be-detected curves based on the detection data;
a curve detection module for detecting the one or more to-be-detected curves based on historical detection data to obtain detection results corresponding to each of the to-be-detected curves, the historical detection data being detection data from a historical process of the cell being pushed into the battery housing without occurrence of any abnormity; and
an abnormity detection module for determining an abnormal result of the cell entering into battery housing based on the detection results corresponding to each of the to-be-detected curves.

9. An electronic device, **characterized by** comprising a memory and a processor, the memory having a computer program stored therein, wherein the computer program, when executed by the processor, enables the processor to implement the method of any one of claims 1 to 7.

10. A computer-readable storage medium having a computer program stored thereon, wherein the computer program, when executed by a processor, implements the method of any one of claims 1 to 7.
